# DEMANDE DE BREVET EUROPEEN

(11) **EP 0 738 855 A1**
(43) Date de publication de la demande: **23.10.1996**
(21) Numéro de dépôt: 96400811.4
(22) Date de dépôt: 16.04.1996
(51) Int. Cl.: F23G 5/14, B22C 5/08

(54) **Procédé de traitement par combustion de solides à faible pouvoir calorifique**

(30) Priorité: 21.04.1995 FR 9504828
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Pascarel, Louis, 91190 Gif-sur-Yvette (FR); Queval, Bernard, 78310 Maurepas (FR)
(74) Mandataire: Vesin, Jacques

(57) **Abrégé**

Lorsqu'on traite un combustible solide, divisé, à faible pouvoir calorifique, tel que du sable de fonderie usagé, on le traite par injection d'air, ou mieux d'oxygène ou d'un suroxygéné, dans un récipient (1), éventuellement avec agitation. On procède, dans le récipient (1) lui-même, à une postcombustion destinée à détruire les restes de combustible entraînés dans les fumées. On utilise pour cela, de préférence, un brûleur (15) monté sur un couvercle (9) qui ferme le récipient, et alimenté avec un excès d'oxygène.

## Description

La présente invention est relative à un procédé de traitement de déchets solides contenant des matières combustibles, par combustion suivie d'un post-combustion.

L'invention a été mise au point au cours de recherches destinées à adapter le procédé décrit dans le document US-A-5.299.618 aux exigences actuelles concernant le respect de l'environnement, mais elle peut s'appliquer à un grand nombre de cas similaires.

Le procédé décrit dans US-A-5.299.618 est destiné au retraitement des sables de fonderie usagés, en vue de débarrasser les grains de sable des matières organiques qui les recouvrent. Pour cela, on dispose le sable usagé, mis sous forme de particules de taille homogène, dans un récipient, et on fait traverser la masse par un courant d'oxygène circulant de bas en haut. Après une mise à feu à la surface supérieure de la masse, la combustion progresse à contre-courant de l'oxygène, jusqu'à disparition quasi-complète des matières organiques. Il est indiqué que les températures atteintes sont de 1000-1100°C au centre du récipient de traitement et de 500-600°C vers les parois.

Les normes actuellement en vigueur imposent des limites à la teneur des fumées rejetées dans l'atmosphère en substances notives. Dans certains cas, pour respecter ces limites, on doit faire subir aux fumées un traitement supplémentaire. Par exemple, certaines fumées doivent avoir été portées au moins à 850°C en présence d'oxygène pendant une à deux secondes, pour éliminer, notamment, les traces de phénols. Cela peut difficilement être obtenu par le procédé décrit à cause du faible pouvoir calorifique du sable usagé.

Il est donc nécessaire, pour que l'installation puisse satisfaire à la réglementation, que les fumées sortant du récipient de traitement soient captées et envoyées dans un dispositif de post-combustion. Dans ce but, les utilisateurs du procédé selon US-A-5.299.618 utilisent actuellement un couvercle recouvrant le récipient et présentant, dans sa partie centrale, un orifice par où les fumées sont captées et entraînées dans une chambre de post-combustion. Dans la pratique, cette chambre est fixe, et reliée au récipient par des conduits articulés permettant des mouvements de rotation et basculement du récipient. Cela augmente considérablement le prix, l'encombrement et les pertes thermiques de l'installation.

Dans le document US-A-5.363.779, on propose un perfectionnement au procédé qu'on vient de décrire. Selon ce procédé, on utilise un récipient d'une seule pièce avec son couvercle, présentant deux ouvertures axiales de faible diamètre à ses extrémités. Dans une phase de "prétraitement", on dispose le récipient, avec sa charge de sable, avec son axe à peu près horizontal, on place un brûleur fonctionnant en excès d'oxygène à une des extrémités du récipient, et on fait tourner celui-ci sur son axe. On pyrolyse ainsi une partie importante des matières organiques contenues dans le sable. Ensuite, on enlève le brûleur et on le remplace par un bouchon poreux, on bascule le récipient pour ramener son axe plus près de la verticale que de l'horizontale, et au cours d'une phase de combustion classique, on injecte un gaz oxydant dans le sable à travers le bouchon poreux, les fumées étant recueillies et envoyées, si nécessaire, dans une chambre de post-combustion extérieure à l'enceinte.

Ce procédé a pour avantage de réduire la quantité de matières organiques à brûler dans l'étape de combustion classique, mais il exige un appareillage plus compliqué, puisqu'il faut une enceinte spéciale, capable de pivoter sur elle-même avec son axe horizontal.

La présente invention a pour but de fournir un procédé et un appareil permettant, lors du traitement par combustion de produits à faible pouvoir calorifique, d'obtenir, à la sortie de l'enceinte de combustion des fumées qui peuvent être rejetées directement à l'atmosphère tout en satisfaisant aux exigences de la réglementation, sans exiger un traitement de post-combustion dans une installation séparée, ce résultat étant obtenu pour un prix de revient peu élevé.

Pour obtenir ce résultat, l'invention fournit un procédé de traitement par combustion de matériaux solides à faible pouvoir calorifique, ce procédé comportant la combustion du matériau solide, placé sous forme d'une masse divisée dans un récipient, à l'aide d'air et/ou d'oxygène, et la création, comme résultat de la combustion, de fumées qui sont ensuite soumises à une post-combustion pour satisfaire aux exigences de la protection de l'environnement avant d'être rejetées à l'atmosphère, la particularité de ce procédé étant que la post-combustion a lieu dans l'enceinte de combustion elle-même, à l'intérieur du volume limité par ladite masse de matériau solide et un couvercle qui ferme ledit récipient.

Suivant une réalisation intéressante, lorsque le procédé comporte l'utilisation d'une cuve dont le fond est pourvu de moyens pour injecter de l'oxygène à l'intérieur de ladite cuve, et d'un couvercle qui présente un passage pour l'évacuation des fumées, on utilise un couvercle qui présente en outre au moins un brûleur de post-combustion et on fait fonctionner ce ou ces brûleurs avec un excès d'oxygène et avec une quantité de combustible calculée pour élever au-dessus d'un niveau fixé à l'avance la température des fumées résultant de la réaction du matériau solide avec l'oxygène introduit au fond de la cuve.

On constate que selon cette réalisation, on n'apporte que peu de changements à une installation fonctionnant conformément au brevet précité US-A-5.299.618 : seul le couvercle est à modifier, ou à ajouter.

Suivant une modalité intéressante qui peut se combiner avec la réalisation qu'on vient de décrire, on fait fonctionner le ou les brûleurs de post-combustion en brûleurs de préchauffage pour mettre en température le matériau solide avant traitement, le brûleur étant alors alimenté avec un mélange de gaz combustible et de comburant (de préférence oxygène) dosé pour obtenir le préchauffage désiré.

Cette réalisation présente l'avantage que le même brûleur est utilisé pour le préchauffage du matériau solide avant le traitement, et pour le "post-chauffage" des fumées résultant de l'injection d'oxygène dans la masse à traiter. L'investissement est ainsi réduit de façon substantielle.

Avantageusement, pour être plus certain de répondre aux prescriptions réglementaires, on utilise un ou plusieurs brûleurs capables de produire une flamme en parapluie, la ou les flammes s'étendant, ensemble, sur sensiblement la totalité de la section de la cuve.

Dans les systèmes à chambre de post-combustion séparée de l'art antérieur, les fumées qui parviennent à la chambre de post-combustion ont une composition relativement homogène, du fait des mélanges qui produisent dans la longueur des conduits reliant le récipient de traitement à la chambre de post-combustion. Lorsque la chambre de combustion et incorporée au récipient, comme le prévoit l'invention, elle reçoit des fumées moins homogènes. En particulier, l'injection d'oxygène par le centre du fond de la cuve, comme décrit dans US-A-5.299.618, peut aboutir à une teneur en matières organiques plus élevée, et une température plus basse, au voisinage des parois du récipient.

Cela est de nature à entraîner une consommation d'énergie exagérée dans le brûleur, pour avoir la certitude que toutes les fumées ont bien atteint la température minimale exigée.

L'emploi de brûleurs à flamme en parapluie permet de réduire cet inconvénient.

Selon une modalité qui permet une réduction supplémentaire importante de la consommation d'énergie, on prévoit que l'air ou l'oxygène est injecté dans la masse de matière combustible en plusieurs points distincts, choisis pour obtenir une composition et une température des fumées plus homogènes qu'avec injection en un seul point.

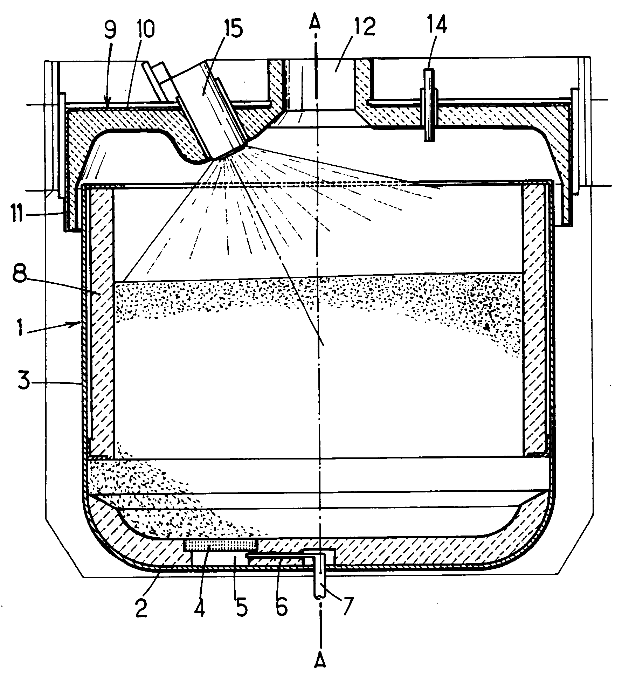

L'invention va maintenant être décrite de façon plus détaillée, à l'aide d'un exemple pratique illustré à l'aide de la figure unique, qui est une coupe axiale d'une enceinte de traitement conforme à l'invention. L'enceinte de traitement comprend une cuve, et un couvercle qu'on décrira successivement. La cuve 1 comprend un récipient métallique, en forme de cylindre fermé à sa base, et comportant un fond 2, et une paroi latérale cylindrique 3. Le fond 2 est garni d'une couche de matière réfractaire, à l'intérieur de laquelle sont disposées trois plaques 4 de matière réfractaire poreuse, dont une seule est représentée. Les plaques 4, en forme de disque, sont également réparties sur la surface du fond, sensiblement à même distance des parois et de l'axe de la cuve. Un espace vide, 5, situé sous chaque plaque poreuse 4, est relié par un passage 6 à un conduit 7 d'amenée d'oxygène, selon l'axe géométrique AA de la cuve, qui est également un axe de rotation pour celle-ci.

La paroi 3 de la cuve est également pourvue d'un garnissage réfractaire 8.

Le couvercle 9 est constitué, dans son ensemble, d'un disque 10 métallique, portant latéralement une jupe 11, dont il est solidaire. Les surfaces intérieures du disque 10 et de la chemise 11 sont garnies de réfractaire, l'épaisseur du réfractaire étant calculée pour que le couvercle 9 vienne coiffer le bord supérieur de la cuve 1. On a représenté en 12 un passage axial de sortie des gaz. La référence 14 désigne une sonde de température.

Le point original de l'invention consiste en un brûleur 15, alimenté en oxygène et en un combustible, qui peut être, par exemple, un fuel industriel, ou encore du gaz naturel. Le brûleur 15 est disposé à proximité du passage 12 et son axe est oblique sur l'axe AA de la cuve, les deux axes se rencontrant sensiblement au centre de celle-ci. L'angle de l'axe du brûleur avec l'axe de la cuve est d'environ 30°. Le brûleur est disposé pour créer une flamme située à l'intérieur du cône d'angle au sommet d'environ 140°, et sur une surface qui correspond au moins à 65% de la section de la cuve.

L'expérience a montré que, avec une telle disposition, la cuve étant remplie sensiblement au 3/4 de son volume avec du sable de fonderie, la totalité des gaz sortant de la surface du sable lors d'une insufflation d'oxygène à travers les plaques poreuses 4, est portée à une température largement supérieure à 850°C en présence d'un excès d'oxygène, ce qui permet de respecter les limites fixées par la réglementation actuelle. Les fumées du brûleur 15 se mélangent aux gaz sortant de la masse de sable, et sont évacuées par le conduit 12 en direction de filtres non représentés, puis d'une cheminée également non représentée.

L'ensemble de la cuve et du couvercle peut être soumis à des mouvements d'oscillation, tels que ceux décrits dans le brevet US-A-5.299.618. Pour le remplissage, le couvercle 9 est enlevé. Il en est de même pour le déversement du sable traité. Il est cependant possible de prévoir des dispositifs de remplissage et d'évacuation du sable passant à travers le couvercle 9.

## Revendications

1. Procédé de traitement par combustion de matériaux solides à faible pouvoir calorifique, ce procédé comportant la réaction du matériau solide, placé sous forme d'une masse divisée dans un récipient (1), avec de l'air et/ou de l'oxygène, et la création, comme résultat de la combustion, de fumées qui sont ensuite soumises à une post-combustion pour satisfaire aux exigences de la protection de l'environnement avant d'être rejetées à l'atmosphère,
caractérisé en ce que la post-combustion a lieu dans l'enceinte de combustion elle-même, à l'intérieur du volume limité par ladite masse de matériau solide et un couvercle (9) qui ferme ledit récipient.

2. Procédé selon la revendication 1, comportant l'utilisation d'une cuve dont le fond est pourvu de moyens (4 à 7) pour injecter de l'air et/ou l'oxygène à l'intérieur de ladite cuve, et d'un couvercle (9) qui présente un passage pour l'évacuation des fumées, et
caractérisé en ce qu'on utilise un couvercle qui présente en outre au moins un brûleur de post-combustion (15) et qu'on fait fonctionner ce ou ces brûleurs avec un excès d'oxygène et avec une quantité de combustible calculée pour élever au-dessus d'un niveau fixé à l'avance la température des fumées résultant de la réaction du matériau solide avec l'oxygène introduit au fond de la cuve.

3. Procédé selon la revendication 2, caractérisé en ce qu'on fait fonctionner le ou les brûleurs de post-combustion (15) en brûleurs de préchauffage pour mettre en température le matériau solide avant traitement, le brûleur étant alors alimenté avec un mélange de gaz combustible et de comburant dosé pour obtenir le préchauffage désiré.

4. Procédé selon l'une des revendications 2 ou 3, caractérisé en ce qu'on utilise un ou plusieurs brûleurs capables de produire une flamme en parapluie, la ou les flammes s'étendant, ensemble, sur sensiblement la majorité de la section de la cuve.

5. Procédé selon l'une des revendications 1 à 4, caractérisé en ce que l'air ou l'oxygène est injecté dans la masse de matière combustible en plusieurs points distincts (4), choisis pour obtenir une composition et une température des fumées plus homogènes qu'avec injection en un seul point.
